# EUROPEAN PATENT SPECIFICATION

(11) **EP 2 317 191 B1**
(45) Date of publication and mention of the grant of the patent: **12.12.2012**
(21) Application number: 09425434.9
(22) Date of filing: 29.10.2009
(51) Int. Cl.: F16K 29/00, F15B 13/04, F15B 13/01

(54) **A valve for support and control of a load comprising an obturator**
Ventil zur Stützung und Regelung einer Last mit einem Ventilabsperrorgan
Vanne pour support et commande de charge comprenant un obturateur

(43) Date of publication of application: 04.05.2011
(73) Proprietor: Bosch Rexroth Oil Control S.p.A., 20149 Milano (IT)
(72) Inventor: Storci, Andrea, 41015 Nonantola (Modena) (IT)
(74) Representative: Colò, Chiara

(56) References cited:
- EP-A1- 1 128 109
- EP-A1- 2 282 065
- DE-A1- 2 809 554
- US-A- 5 715 858

## Description

The invention relates to a valve for support and control of a load comprising an obturator.

The invention is particularly useful in support and control valves used in load lowering. These valves are commonly used in hydraulic circuits for activating mechanical lifting arms, lift trucks and other machinery predisposed for moving a load along at least a vertical motion component.

Activating circuits for the above-described machinery generally comprise at least a hydraulic actuator which is supplied with a fluid in order to cause a rise or descent of a load. In particular, in a linear actuator in cylinder form, the supply of fluid to the base of the cylinder causes extension of the stem and the raising of the load, while supply of fluid to the chamber of the stem causes retraction of the stem and descent of the load.

The above-described activating circuits comprise a support and control valve of the descent, which is usually interposed between the supply fluid source and the bottom of the linear actuator, or more in general between the pressurised fluid source and the supply source to the actuator for raising the load. The function of the valve is to enable the load to be kept in position, in the absence of fluid supply to the actuator and, in the presence of fluid supply for descent of the load, to enable control of load descent.

Known-type valves comprise an obturator provided with a seal portion destined to enter into contact with a seal seating arranged along a fluid passage conduit. The obturator is mobile between a closed position, in which the seal portion is in contact with the seal seating and the conduit is closed to passage of fluid, and an open position, in which the seal portion is not in contact with the seal seating and the fluid can transit along the conduit through the seal seating. The seal portion of the obturator must be shaped such that, in the displacement from the closed position towards the open position, the area of the section which is freed for the passage of fluid is at first small, such that the fluid flow that can transit at first is contained and the initial descent of the load is very slow, then increasing more sharply following the first instants of the descent.

To obtain this result, the seal portions on known-type obturator are truncoconical, with the smallest-diameter portion facing towards the seal seating. In the closed position of the obturator, the seal portion is at least partly arranged internally of the seal seating, such that the contact between the seal seating and the seal portion is achieved at an intermediate section of the seal portion.

In order for the passage section freed during the first part of the obturator run towards the open position is truly small, the angle of conicity of the seal portion must also be relatively small. However, a too-small angle of conicity inevitably means that the seal portion, in the closed position, sticks internally of the seal seating due to wedge effect. The obturator is kept in closed position because of the thrust exerted by a spring, a very intense thrust as it has to contrast the thrust due to very high pressure.

The angle of conicity of the seal portion is therefore normally selected as a compromise between the opposite needs of containing the area of the passage section for the fluid in the first tract of the opening run of the obturator and of preventing sticking of the obturator in the seal seating. The result of the compromise is that known-type obturators tend to stick all the same in the seal seating.

The sticking of the obturator is a serious drawback in obturators of known type. The displacement of the obturator from the closed position towards the open position is normally done by the thrust exerted by the piloting pressure of a fluid. The displacement of the obturator from the closed position and the consequent opening of the valve should occur as soon as the piloting pressure exerts greater thrust than the thrust exerted by the spring which maintains the obturator in the closed position. If however the obturator is stuck in the seal seating, the piloting pressure must reach a higher value than the expected one. At the moment the piloting pressure reaches a sufficient value to unblock the obturator, the obturator brusquely displaces towards the open position, sharply freeing up a large area for passage of fluid. In this way the descent of the load also begins rather brusquely.

Further, the rapid displacement of the obturator and the rapid opening of a wide area for the passage of the fluid induces a corresponding drop in the piloting pressure. This pressure drop tends to return the obturator towards the closed position, leading to a sharp slowing-down of the load descent. The result is that oscillating phenomena set in, which are uncontrolled and extremely dangerous for the whole circuit and for the correct functioning of the machinery.

An example of prior art obturator is known from DE 28 09 554. This obturator shows a large angle of conicity, in order to prevent sticking of the obturator in the seal seating, but the area of the passage section for the fluid in the first tract of the opening run of the obturator is too large, such that the operations of the valve are too abrupt.

Another example of prior art is known from document EP 2 282 065, which is prior art according to Article 54(3) EPC. This document shows an obturator having a conical seal portion followed by a cylindrical portion, but the cylindrical portion is followed by a conical portion having a great angle of conicity. Also in this case, therefore, the opening of the valve is too abrupt.

The aim of the present invention is to provide a valve for support and control of a load comprising an obturator with no leakage, which obviates the drawbacks of the valves comprising an obturator of known type. Characteristics and advantages of the present invention will better emerge from the following description, made by way of non-limiting example, of a preferred but not exclusive embodiment of the invention, made with reference to the accompanying figures of the drawings, in which:
figure 1 is a schematic view of an obturator of the present invention, inserted in a valve for supporting and controlling a descent of a load;
figure 2 is an enlarged view of the obturator of the present invention, in a closed position;
figure 3 shows the obturator of the preceding figures in an open position; figure 4 is a graph showing the progress of section b which opens for passage of the fluid in relation with the position of the obturator a.

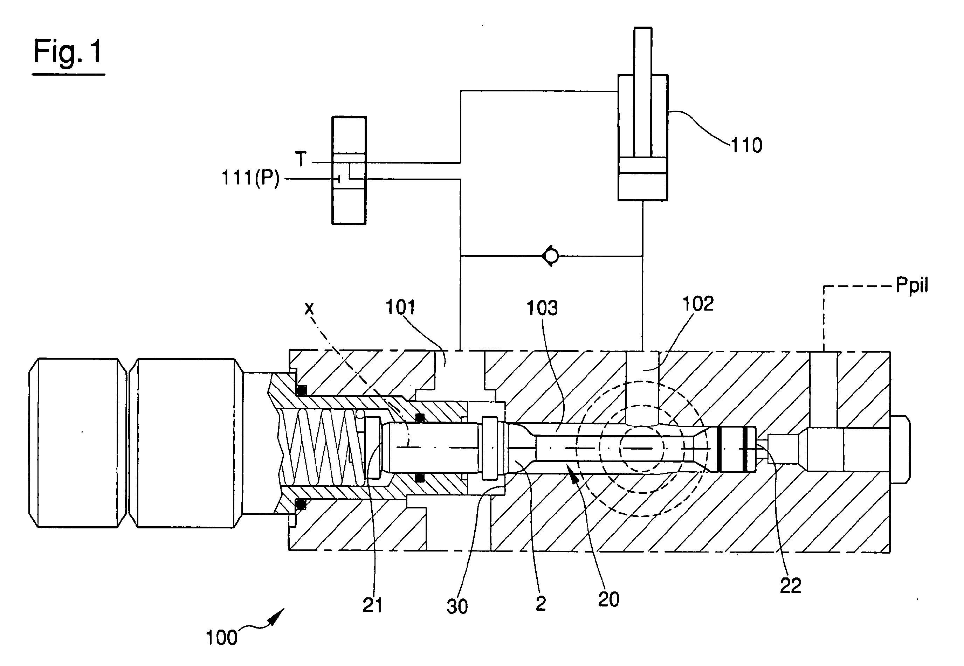

The obturator of the present invention comprises a cylindrical main body 20 provided with a longitudinal axis X. The main body 20 is provided with a first end 21 and a second end 22 which are predisposed to slide in respective seating afforded in the body of the valve in which the obturator is functioning. Forces act on the ends 21, 22 of the main body 20, which forces cause axial displacement of the obturator. These forces can be impressed by elastic means and/or the pressure exerted by a fluid, according to the type of valve the obturator is operating in. An example of a valve in which the present obturator can be used is illustrated in figure 1. The valve illustrated in figure 1 is a valve for support and control of a descent of a load. It is used in a circuit comprising an actuator 110 predisposed for actuating displacement of a load along at least a vertical motion component. In the illustrated example it is constituted by a hydraulic cylinder, but a linear actuator of a different type could also be used, or a rotating actuator. A pressurised fluid is sent by a pump 111, through a distribution valve to a load-raising chamber or load-descending chamber. In the cylinder illustrated in figure 1, the raising of the load is achieved by supplying pressurised fluid to the bottom of the cylinder, while the descent of the load can be commanded by supplying the fluid to the chamber of the piston stem.

The valve 100 comprises a conduit for fluid passage provided with a first opening 101 and a second opening 102. A seal seating 30 is located at an intermediate point of the conduit for the fluid passage, which seating is destined to enter into contact with a shaped portion 2 of the obturator of the present invention. When the shaped portion 2 of the obturator is in contact with the seal seating 30, the conduit for passage of the fluid is closed and there is no communication between the first opening 101 and the second opening 102 of the valve 100. The obturator is maintained in this closed position by a spring which acts on the first end 21 of the obturator.

With the obturator in the closed position, and in the absence of pressurised fluid supply to the actuator 110, the load associated to the actuator 110 remains in a stationary condition. The weight of the load tends to compress the chamber of the actuator 110 which is connected to the second opening 102 of the valve 100. The fluid would therefore tend to pass through the seal seating towards the first opening 101, but the thrust exerted by the spring which acts on the first end 21 of the obturator opposes the displacement of the obturator and the seal portion 3 of the seal seating 30. In order to enable descent of the load it is therefore necessary to cause the displacement of the obturator in such a way that the seal portion 2 detaches from the seal seating 30. In the illustrated example, the displacement of the obturator is caused in a known way by sending a piloting pressure Ppil onto the surface of the second end 22 of the obturator.

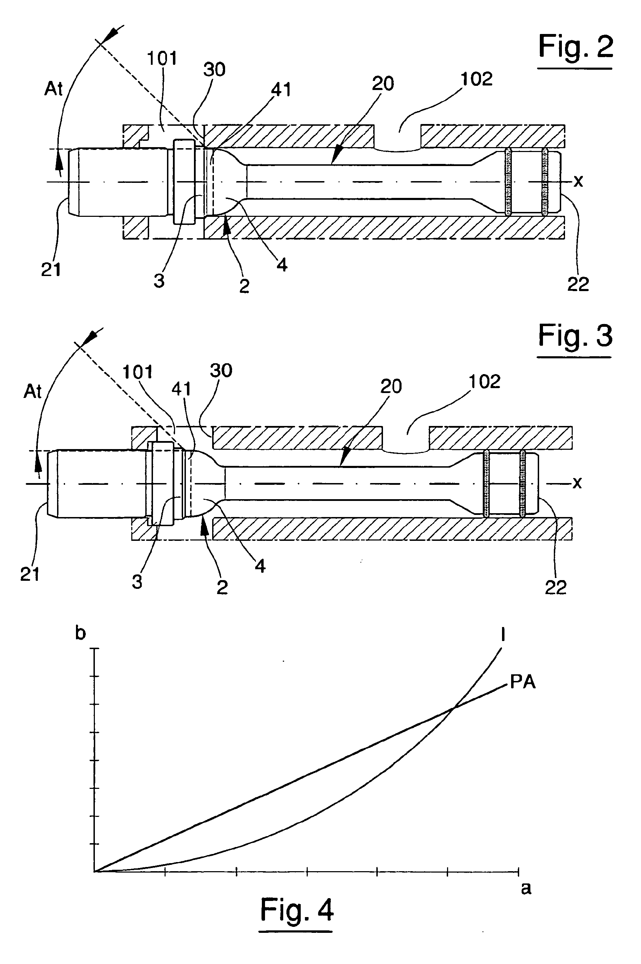

The obturator (figures 2 and 3) comprises a shaped portion 2, arranged in an intermediate zone of the main body 20, which exhibits a seal portion 3 destined to enter into contact with the seal seating 30 such as to occlude the passage section for the fluid delimited by the seal seating 30 (figure 2).

In the example of a valve illustrated in figure 1, when the seal portion 3 is in contact with the seal seating 30 the fluid cannot transit between the second opening 102 and the first opening 101 of the valve 100, such that the stem of the actuator 110 cannot return, and the load associated thereto remains stationary.

The seal portion 3 exhibits a truncoconical shape with the smaller-diameter portion facing towards the seal seating 30 and towards the side of the second opening 102. The seal portion 3 exhibits an angle of conicity At such as to prevent the seal portion 3 from blocking internally of the seal seating 30 by wedge effect. The angle of conicity At of the seal portion 3 is preferably 45° or greater. Further, the minimum diameter of the seal portion 3 is preferably smaller than the diameter of the seal seating 30. The realisation of a seal portion 3 having an angle of conicity At which can prevent any possible sticking or blocking of the seal portion 3 internally of the seal seating 30 enables all the major problems of known-type obturators to be resolved. In particular, since the seal portion 3 is never in the sticking condition internally of the seal seating 30, the opening of the passage hole for the fluid is extremely rapid and precise with respect to an opening signal transmitted by means of a piloting pressure, as in the illustrated example of figure 1. This prevents the opening of the passage hole from being delayed due to sticking of the seal portion which often obtains in known-type obturators, in which primarily the opening is not done at the expected pressure, but at a greater pressure which must enable, apart from overcoming the preset load for the valve opening, the sticking of the seal portion to be unblocked, with a consequent setting off of the oscillating phenomena mentioned herein above.

As is visible in the enlarged view of figure 2, the seal portion 3 is arranged in contact with the seal seating at an intermediate section thereof. The fact that the minimum diameter of the seal portion 3 is less than the internal diameter of the seal seating 3 0 means that when the seal portion 3 detaches from the seal seating 30 a fluid passage section is immediately opened. The difference between the minimum diameter of the seal portion 3 and the internal diameter of the seal seating 30 can be advantageously reduced, such that the available section for the fluid passage is very limited, at least in the instants following the detachment of the seal portion 3 from the seal seating 30.

The shaped portion 2 further comprises a regulating portion 4, consecutive to seal portion 3, which, at least in proximity of the seal portion 3, exhibits an initial tract 41 which is substantially cylindrical or, alternatively, a truncoconical tract having a very small angle of conicity, in the order of a few degrees.

The initial tract 41 of the regulating portion connects directly to the seal portion 3. A substantially cylindrical conformation, or a truncoconical conformation with a very small angle of conicity, means that even during a first part of the opening run of the obturator, subsequent to the first detachment of the seal portion 3 of the seal seating 30, the section available for the passage of the fluid is relatively small (curve I in figure 4), such that the passage of the fluid initially occurs at a relatively contained flow rate. In the illustrated example of figure 1, this means that the drop in load, which is determined by enabling the fluid to unload from the actuator 110 passing from the second opening 102 to the first opening 101 via the seal seating 30, occurs initially at a relatively low and controlled speed, without brusque movements of the load and any type of oscillating movement. Overall the regulating portion 4 exhibits a diameter which diminishes as it distances from the seal portion 3. The regulating portion 4 preferably comprises at least a portion of curved profile and/or at least a conical portion or various consecutive portions having a growing conicity. The profile of the regulating portion 4, in the part consecutive to the first tract 41, can be chosen such as to control the fluid flow according to predetermined laws. In particular the reduction of the diameter of the regulating portion 4, following the first tract 41, can be relatively sharp. This enables, after the first obturator run tract in which, as has been mentioned, the fluid passage section is kept relatively small, the section for fluid passage rapidly grows and with it the fluid flow. In the example illustrated in figure 1, this means that the descent of the load, following the initial instants in which it is relatively slow, can proceed at a relatively fast speed. In figure 4, the curve I shows the progress of the available area b for passage of the fluid according to the position a of the obturator according to the present invention, while the curve PA shows the same relation in reference to an obturator of known type. The closed position is represented by the origin of the Cartesian axes. The difference between the two curves is obvious, showing how during the initial stage of the obturator run in a distancing direction from the closed position, for the obturator of the invention the increase in section is initially very much more limited with respect to the case of an obturator of known type, then to increase more rapidly in the tract of run furthest from the closed position.

The obturator of the present invention provides important advantages.

The predisposing of a seal portion having an angle of conicity able to prevent any possible sticking or blocking of the seal portion internally of the seal seating enables all the major problems of the known-type obturators to be solved. In particular, as the seal portion is never in the sticking position internally of the seal seating, the opening of the passage hole for the fluid is extremely rapid and precise with respect to an opening signal transmitted by means of a piloting pressure. The presence of a seal portion thus conformed enables a regulating portion to be predisposed which is provided with a substantially cylindrical or very limitedly conical initial tract such that during an initial tract of the opening run of the obturator, the area of the section available for the fluid passage can be contained to very low values. This enables considerably limiting the initial descent velocity of the load. Further, as the most critical stage for the control of the descent of the load is the initial stage and the obturator of the invention enables a very accurate control of this critical stage, the shaped portion can be conformed such that following the initial tract of the opening run of the obturator, the diameter decreases more rapidly, such that the area which is free for the passage of the fluid also grows rapidly and the lowering of the load can proceed at a greater speed.

## Claims

1. A valve for support and control of a load, comprising: an obturator having a shaped portion (2) provided with a longitudinal axis (x), the shaped portion (2) exhibiting a seal portion (3) destined to enter into contact with a seal seating (30) such as to occlude a passage section for a fluid, which seal portion (3) has a truncoconical shape with an angle of conicity (At) that is such as to prevent the seal portion (3) from being blocked internally of the seal seating (30) by wedge effect; the shaped portion (2) comprising a regulating portion (4), consecutive to the seal portion (3), which, at least in proximity of the seal portion (3), exhibits an initial tract (41) which is substantially cylindrical or exhibits an angle of conicity which is close to a zero value;
the regulating portion (4) exhibiting a diameter which diminishes as it distances from the seal portion (3); and
the regulating portion (4) comprises at least a curved portion of profile.

2. The valve of claim 1, wherein the regulating portion (4) exhibits at least a portion of conical profile or various portions having growing conicity.

3. The valve of claim 1, wherein the angle of conicity (At) of the seal portion (3) is greater than or equal to 45°.

4. The valve of claim 1, wherein the minimum diameter of the seal portion (3) is less than a diameter of the seal seating (30) predisposed to receive the obturator.

5. The valve of anyone of the preceding claims, comprising: a conduit (103) for passage of a fluid, provided with a first opening (101) and a second opening (102) and a seal seating (30), arranged in an intermediate position between the first opening (101) and the second opening (102); an obturator (2,3,4,20,21,22,41), which is mobile between a closed position, in which a seal portion (3) of the obturator is in contact with the seal seating (30) and the first opening (101) and the second opening (102) are not in communication with one another, and at least an open position, in which the first opening (101) and the second opening (102) are in communication with one another.

## Patentansprüche

1. Ventil zur Stützung und Regelung einer Last, umfassend: ein Ventilabsperrorgan, aufweisend einen geformten Abschnitt (2), versehen mit einer Längsachse (x), wobei der geformte Abschnitt (2) einen Dichtungsabschnitt (3) aufweist, der dazu bestimmt ist, mit einer Dichtungsaufnahme (30) in Kontakt zu kommen, sodass ein Durchströmungsbereich für ein Medium versperrt wird, wobei der Dichtungsabschnitt (3) eine Kegelstumpfform mit einem Konizitätswinkel (At) besitzt, der so beschaffen ist, dass verhindert wird, dass der Dichtungsabschnitt (3) durch eine Keilwirkung in der Dichtungsaufnahme (30) blockiert wird; der geformte Abschnitt (2) umfasst einen Regelungsabschnitt (4), der auf den Dichtungsabschnitt (3) folgt, der mindestens in der Nähe des Dichtungsabschnitts (3) ein Anfangsstück (41) aufweist, das im Wesentlichen zylinderförmig ist oder einen Konizitätswinkel aufweist, der nahe an einem Wert null ist; der Regelungsabschnitt (4) weist einen Durchmesser auf, der geringer wird, je weiter er sich vom Dichtungsabschnitt (3) entfernt, und der Regelungsabschnitt (4) umfasst mindestens einen gekrümmten Profilabschnitt.

2. Ventil nach Anspruch 1, wobei der Regelungsabschnitt (4) mindestens einen Abschnitt eines konischen Profils oder verschiedene Abschnitte, die eine zunehmende Konizität besitzen, aufweist.

3. Ventil nach Anspruch 1, wobei der Konizitätswinkel (At) des Dichtungsabschnitts (3) größer oder gleich 45° ist.

4. Ventil nach Anspruch 1, wobei der Mindestdurchmesser des Dichtungsabschnitts (3) geringer ist als ein Durchmesser der Dichtungsaufnahme (30), ausgelegt zum Aufnehmen des Ventilabsperrorgans.

5. Ventil nach irgendeinem der vorhergehenden Ansprüche, umfassend eine Leitung (103) für das Durchströmen eines Mediums, versehen mit einer ersten Öffnung (101) und einer zweiten Öffnung (102) und einer Dichtungsaufnahme (30), angeordnet an einer Zwischenposition zwischen der ersten Öffnung (101) und der zweiten Öffnung (102), ein Ventilabsperrorgan (2, 3, 4, 20, 21, 22, 41), das zwischen einer geschlossenen Position, in der ein Dichtungsabschnitt (3) des Ventilabsperrorgans mit der Dichtungsaufnahme (30) in Kontakt ist und die erste Öffnung (101) und die zweite Öffnung (102) nicht miteinander in Kommunikation sind, und mindestens einer offenen Position, in der die erste Öffnung (101) und die zweite Öffnung (102) miteinander in Kommunikation sind, beweglich ist.

## Revendications

1. Vanne pour support et commande de charge, comprenant: un obturateur ayant une partie profilée (2) pourvue d'un axe longitudinal (x), la partie profilé (2) présentant une partie étanche (3) destinée à entrer en contact avec un logement d'étanchéité (30) de sorte à fermer une section de passage d'un fluide, ladite partie étanche (3) possède une forme tronconique avec un angle de conicité (At) tel qu'il empêche la partie étanche (3) d'être bloquée à l'intérieur du logement d'étanchéité (30) par un effet de coin; la partie profilée (2) comprenant une partie régulatrice (4), consécutive de la partie étanche (3), qui, au moins à proximité de la partie étanche (3), présente une partie initiale (41) étant substantiellement cylindrique ou présente un angle de conicité proche de la valeur zéro; la partie régulatrice (4) présentant un diamètre qui diminue à mesure qu'elle s'éloigne de la partie étanche (3) et la partie régulatrice (4) comprend au moins une portion courbe de profil.

2. Vanne selon la revendication 1, dans laquelle la partie régulatrice (4) présente au moins une partie de profil conique ou plusieurs parties ayant une conicité croissante.

3. Vanne selon la revendication 1, dans laquelle l'angle de conicité (At) de la partie étanche (3) est supérieur ou égal à 45°.

4. Vanne selon la revendication 1, dans laquelle le diamètre minimum de la partie étanche (3) est inférieur à un diamètre du logement d'étanchéité (30) prédisposé à recevoir l'obturateur.

5. Vanne selon l'une quelconque des revendications précédentes, comprenant: un conduit (103) pour le passage d'un fluide, pourvu d'une première ouverture (101) et d'une seconde ouverture (102) ainsi que d'un logement d'étanchéité (30), disposé dans une position intermédiaire entre la première ouverture (101) et la seconde ouverture (102); un obturateur (2, 3, 4, 20, 21, 22, 41), mobile entre une position fermée, dans laquelle une partie étanche (3) de l'obturateur est en contact avec le logement d'étanchéité (30) et où la première ouverture (101) et la seconde ouverture (102) ne sont pas en communication l'une avec l'autre, et au moins une position d'ouverture, dans laquelle la première ouverture (101) et la seconde ouverture (102) sont en communication l'une avec l'autre.
